# EUROPEAN PATENT APPLICATION

(11) **EP 1 444 885 A2**
(43) Date of publication of application: **11.08.2004**
(21) Application number: 04100366.6
(22) Date of filing: 02.02.2004
(51) Int. Cl.: A01G 9/08

(54) **Method and apparatus for a separate arrangement of plants**

(30) Priority: 07.02.2003 NL 1022629
(71) Applicant: L&P Group B.V., 5504 EB Veldhoven (NL)
(72) Inventor: VAN DE LAAR, Johannes Petrus Maria, 5504 EB, Veldhoven (NL); OSSEWAARDE, Roel, 5061 WE, Oisterwijk (NL); VAN DER HORST, Gijsbertus Nicolaas Maria, 5541 VK, Reusel (NL)
(74) Representative: Smeets, Eugenius Theodorus J. M.

(57) **Abstract**

A method is presented for the separate arrangement of plants (1), which plants (1) are subjected to a laminar flow of air and are at least partly oriented thereby and, thus oriented, are introduced into a grid of openings at least partly under the influence of the force of gravity so as to be transported therefrom for further treatment. In particular, said grid is formed in accordance with a two-dimensional matrix and comprises vertically positioned placement compartments (24) which are mutually separated by a system of slots (28), which system of slots (28) serves as an air inlet for a space situated above the grid, in which space (21) the plants are supplied.

## Description

The invention relates to a method of separately arranging plants, which plants are subjected to a flow of air and are at least partly oriented thereby and, thus oriented, are introduced into a grid of openings at least partly under the influence of gravity so as to be transported therefrom for further treatment as defined in the opening part of claim 1. The term 'plants' herein also covers parts of plants, in particular cuttings such as those of, for example, chrysanthemums. Such plants or plant parts are delivered in large quantities and are to be separated before further handling, in a uniform manner if possible, and are then processed further, for example planted and/or placed in containers.

The prior Dutch patent 1 006 694 published 990401 describes a method whereby an air flow is blown against the plants from below, whereupon the plants move downward with the force of gravity and the air flow along the wall of a cylindrical vessel for entering consecutive openings in a rim of vertical openings in mutually separate positions. An additional air flow returns plants for which the procedure was unsuccessful to the inlet opening of the vessel. The known method may deliver good results, but the grid of openings is one-dimensional in principle, so that it only has a small accommodation capacity in parallel. In addition, whirling and other disturbing air movements can occur in such cylindrical symmetrical vessels. Finally, the round rim shape is not very suitable for connecting to compact boxes, pallets, and similar two-dimensional configurations, in which the subsequent transport of such plants usually takes place.

The inventor has realized that accordingly such a two-dimensional arrangement for accommodating plants would offer many advantages in the presentation of the plants to the next step in the production or processing sequence.

Therefore, it is among the objects of the invention to combine the orientation of the plants directly with the arrangement of the oriented plants in a two-dimensional grid.

The invention is thus characterized in one of its aspects in that said grid is formed in accordance with a two-dimensional matrix and comprises vertically positioned placement compartments which are mutually separated by a system of slots, which system of slots serves as an air inlet for a space situated above the grid, in which space the plants are supplied.

In a preferred embodiment, said matrix is rectangular and built up from rectangular or square placement compartments which are surrounded by slots of the system of slots on all sides. Since the slots are narrow, turbulence of the air flow can be avoided in many cases. A laminar gas flow arises above the matrix of placement compartments which promotes a suitable orientation of the plants or plant cuttings, i.e. an orientation in which the stems point towards the placement compartments. In addition, a slight underpressure is created above the placement compartments, adjacent the edges thereof, which promotes an insertion of the plants in the placement compartments.

In a preferred embodiment of the invention, the placement compartments become wider in upward direction. This promotes both the reception of plants in the placement compartments narrowing in downward direction and the avoidance of turbulence in the slots narrowing in upward direction.

In another preferred embodiment, a filling mechanism is provided along a first axis of the two-dimensional matrix, and the matrix is driven in steps or continuously in a direction transverse to said first axis.

In a further preferred embodiment, the placement compartments are positioned above a plate provided with supply slots, which supply slots are arranged substantially in conformity with the positions belonging to one of the directions of said system of slots. The air flowing in upward direction is thus conveniently supplied and clogging-up of the slots is substantially prevented.

The invention also relates to an apparatus suitable for carrying out the method and characterized in that it comprises a blower mechanism for subjecting the plants to a flow of air and thereby orienting them at least partly, a grid arrangement for accommodating the plants thus oriented at least partly in a grid of openings under the influence of gravity for the purpose of delivery, said grid being formed as a two-dimensional matrix and comprising vertical placement compartments mutually separated by a system of slots, which system of slots serves as an air supply to a feed space for the plants located above the grid. Such an apparatus is found to position the plants readily and with a high success rate at a low cost.

In a further preferred embodiment, said placement compartments and said feed space are jointly arranged in a screened box that is preferably transparent. This promotes a homogeneous laminar gas flow above the placement compartments. Undesirable air flows, such as a draft, do not adversely affect the placement process then. The box has an opening at its upper side through which the air flow can escape.

According to a further preferred embodiment, the bottom of said screened box is provided with bottom slots which each extend in one direction at the areas of slots of said system of slots and substantially parallel to slots of said system. Both the support of the placement compartments and the supply of air to the screened box are thus realized in a simple and advantageous manner.

According to a further preferred embodiment, said system of slots delimits a rectangular space for each placement compartment. The orientation of the plants is realized in a substantially uniform manner thereby.

According to a further preferred embodiment, the apparatus is further provided with a feeder mechanism for plants which extends in a direction alongside a row from among a series of rows of placements compartments in a distributed manner and which has a feed direction transverse to said rows. A number of plants are inserted in parallel into the placement compartments each time in an advantageous manner thereby.

According to a further preferred embodiment, mutually adjoining rows of placement compartments are interconnected by an end mechanism which allows a relative rotation of said mutually adjoining rows about an axis parallel to their longitudinal axes. The 'chain' thus formed constitutes an assembly that can be readily driven.

These and other elements, aspects, and advantages of the invention will be described in detail below with reference to preferred embodiments of the invention and in particular to the accompanying drawings, in which:
Fig. 1 is a general view of the apparatus according to the invention,
Fig. 2 gives an example of a configuration of the placement compartments,
Fig. 3 gives a second example of a configuration of the placement compartments,
Fig. 4 is a vertical cross-sectional view through a placement compartment, and
Fig. 5 shows a connection of a feeder mechanism to the matrix of placement compartments.

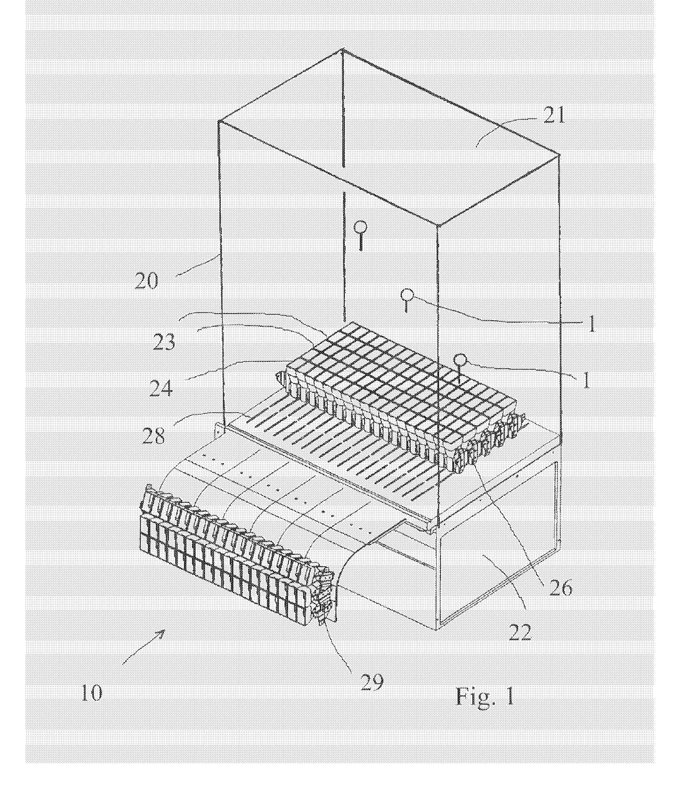

Fig. 1 is a general view of the apparatus 10 according to the invention. A screened box 20, which is transparent here, offers space to the placement compartments 24 which are arranged in a rectangular matrix; each row of the matrix has eighteen compartments in this case by way of example. The compartments 24 are all separated from one another at their upper sides by comparatively narrow slotted openings of equal; width that form a system of slots 23, through which air can pass. The eighteen compartments 24 are fixed to one another in each row by means of a construction not shown here. Each row furthermore has an end mechanism 26. A similar mechanism (not shown) is fastened to the other end. These mechanisms are flexibly interconnected such that each row of placement compartments as it were forms a link in a very wide chain. As is indicated at 29, the chain can thus allow a certain bending and may be continuous, if so desired. The screened box 20 measures 54 x 50 cm and is 200 cm high here and is placed on a box 22 providing space for, for example, accommodating an air pump, fan, or the like for generating the necessary flow of air. These elements have not been shown for the sake of simplicity.

The air is blown from the lower box 22 into the slot spaces through slots 28 which are preferably provided each in a location corresponding to a slot position between consecutive placement compartments of a matrix row. The air will then flow through the slotted openings 23 to the upper side 21 of the box 20 and can leave the box 20 there. Plants 1, chrysanthemum cuttings 1 in this case, are introduced at the upper side of the box 20, through an opening in the upper side 21 or through a hole in the side wall of the box 20 provided adjacent the upper side, into the laminar air flow moving to the upper side of the box 20. Since the placement compartments are on the upper side of the box 22, their lower sides may be regarded as being practically closed to the air flow discussed above. Owing to their chain-type construction, the placement compartments can be readily driven in longitudinal direction of the 'chain'. This mechanism is not shown in the drawings. If this takes place in steps corresponding to the pitch of the chain, a next row of placement compartments will arrive at the level of a filling mechanism (not shown) each time so as to fill this next row of compartments, or a portion thereof. Filling of two or possibly more rows of compartments is also conceivable. A more or less continuous drive in the direction of the arrow is also possible. An opening for the discharge of the placement compartments is present at the front of the box 20. It is noted that it is not necessary for each and every placement compartment to be actually filled with a plant 1 or cutting 1 during operation of the apparatus 10. A filling percentage of 10% already gives satisfactory results. Good results are obtained with a degree of filling of 20%.

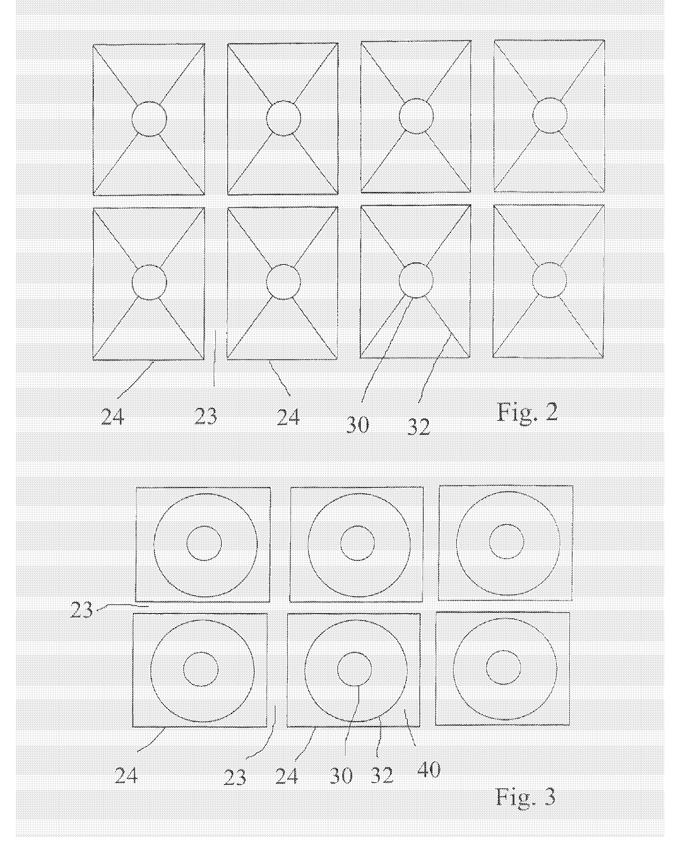

Fig. 2 illustrates an example of a configuration of placement compartments 24 and the interposed slotted air holes 23, shown in plan view here. The rectangles have an aspect ratio of 2:1 in this case. The dimensions, approximately 6 cm x 3 cm here, are adapted to the plants to be received, such that both the thickness of the stem and it s length are taken into account: the compartment will be a kind of 'vase' without a bottom. There are approximately 18 x 8 = 144 placement compartments 24 within the box 20. Slots 23, approximately 1 mm wide here, are present between the placement compartments 24 so as to cover the entire circumference of the placement compartment. Their width is so small that little turbulence arises at the prevalent air velocity. In the placement compartment 24 itself the air is more or less stagnant because the lower side is practically closed. This means that in this location substantially exclusively the force of gravity acts on the plants. The plants 1 are preferentially attracted towards the center of such a placement compartment 24 by the above arrangement, while the air blown through the slots 23 on the one hand supports this preference, and on the other hand tends to keep the plant more or less upright as a result of the greater air resistance of leaves and the like. Once the plant 1 has entered the placement compartment 24, this vertical maintenance is further supported by the tapering shape of the portion 32 of the placement compartment 24. The lower portion 30 of the placement compartment 24 is cylindrical. If so desired, each individual placement compartment 24 in this arrangement may be subdivided into two separate, square placement compartments, whereby the number of plants 1 to be accommodated is doubled, which may be useful, for example, for smaller items. The subdivision may be achieved by means of an overall mask that is placed in front of or as a replacement for the mask shown here.

Fig. 3 shows a second example of a configuration of the placement compartments 24. The compartments are circular in this case. The general working principle is approximately the same as in Fig. 2; the placement of the plant can be more accurately symmetrical owing to the round shape. On the other hand, the flow through the slot may be less uniform. The actual slots are formed in that sleeves or collars 40 extend outwards beyond the conical shape 32.

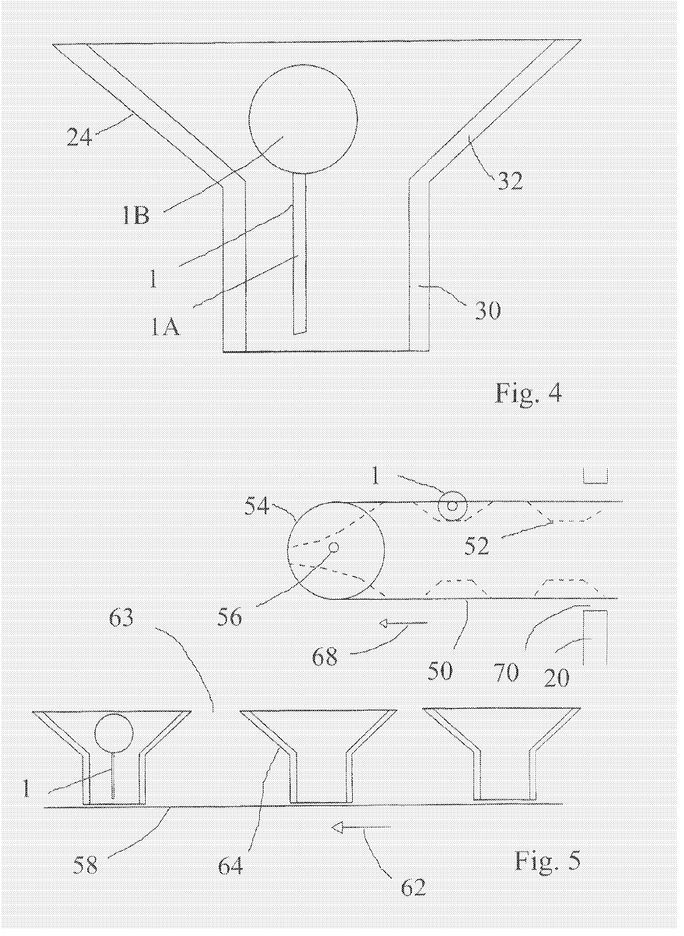

Fig. 4 is a vertical cross-sectional view of a placement compartment 24. It is apparent that the placement compartment is built up from a cylindrical shaft 30 and a tapering portion 32. The shaft 30 is preferably made from a thin plate material or sawn from a thin-walled tube of, for example, a synthetic material such as polythene or teflon. The tapering portion 32 provides the transition from the round tube to the rectangular shape shown in Fig. 2. This is preferably achieved by means of an integral injection-molded piece together with the shaft 30. A manufacture as two separate components to be mutually fastened is also possible, said components being fastened to one another in a manner usual for this kind of assembly, for example by clamping or with hard PVC adhesive. The tapering portion is conical in the embodiment of Fig. 3; the collar 40 of Fig. 3 is not shown here. The chrysanthemum cutting 1 of this example has an approximately 4 cm long stem 1A and a 4 cm long portion 1B with laterally projecting leaves. The tapering portion 32 may advantageously be provided with ridges for limiting any 'sticking' of the plants thereto.

Fig. 5 shows the connection of a feeder mechanism to the matrix of placement compartments 64. Reference numeral 50 denotes a so-termed Jacob's ladder which is tensioned around a roller system 54; it may alternatively be positioned vertically. The roller system 54 rotates about an axis 56 in the direction of arrow 68. The Jacob's ladder 50 itself comprises accommodation hollows 52 such that plants 1 distributed over the Jacob's ladder are passed through an opening 70 in a side wall of the screened box 20 (Fig. 1), eventually dropping off the Jacob's ladder onto the matrix of placement compartments 60. Of the latter, the drive direction 62, the bottom plate 58 of the screened box, and part of the air slot system 64 are indicated. The distance between the Jacob's ladder and the placement compartments may be greater for a better positioning of the dropping plants, the width of the Jacob's ladder may be approximately equal to that of the matrix of placement compartments, the speed of rotation of the Jacob's ladder and the drive speed of the matrix may be mutually attuned. The opening 70 may be used for the discharge of the air supplied through the slots 28 and the slotted openings 23 (Fig. 1), or this may be realized in an alternative manner. Filling or loading of the Jacob's ladder 50 may take place in that the plants 1 are deposited thereon in bulk. Alternative loading mechanisms may well be used. The Jacob's ladder 50 may be at an angle to the bottom plate 58 instead of parallel thereto as shown in the drawing. The plants 1 can be transported from a factory floor to the upper side 21 of the box 20 more easily in this manner. In a favorable modification, the end of the Jacob's ladder 50 is situated outside the box 20 and close to the hole 70 in the wall of the box 20. A fan placed below this, also outside the box 20, is then capable of blowing the plants into the hole 70, i.e. into the box 20, the very moment they drop off the ladder 50. The air flow inside the box 20 is interfered with as little as possible thereby.

The invention was described above with reference to preferred embodiments. Thos skilled in the art will be aware that numerous modifications thereof are possible without departing from the scope of the appended claims. The embodiments should accordingly be regarded as illustrative and no limitations other than those recited in the claims are to be assumed with regard to the invention.

Thus the laminar air flow may be created not by blowing from below the placement compartments, but by suction of air at a distance from above the placement compartments, for example from the open upper side of the screened box.

## Claims

1. A method of separately arranging plants, which plants are subjected to a flow of air and are at least partly oriented thereby and, thus oriented, are introduced into a grid of openings at least partly under the influence of the force of gravity so as to be transported therefrom for further treatment,
**characterized in that** said grid is formed in accordance with a two-dimensional matrix and comprises vertically positioned placement compartments which are mutually separated by a system of slots, which system of slots serves as an air inlet for a space situated above the grid, in which space the plants are supplied.

2. A method as claimed in claim 1, wherein said matrix is rectangular and built up from rectangular or square placement compartments which are surrounded by slots of the system of slots on all sides.

3. A method as claimed in claim 1 or 2, wherein the placement compartments become wider in upward direction.

4. A method as claimed in claim 1, 2, or 3, wherein a filling mechanism is provided along a first axis of the two-dimensional matrix, and the matrix is driven in steps or continuously in a direction transverse to said first axis.

5. A method as claimed in any one of the claims 1 to 4, wherein the placement compartments are positioned above a plate provided with supply slots, which supply slots are arranged substantially in conformity with the positions belonging to one of the directions of said system of slots.

6. An apparatus suitable for carrying out the method as claimed in claim 1, **characterized in that** it comprises a blower mechanism for subjecting the plants to a flow of air and thereby orienting them at least partly, a grid arrangement for accommodating the plants thus oriented at least partly in a grid of openings under the influence of the force of gravity for the purpose of delivery, said grid being formed as a two-dimensional matrix and comprising vertical placement compartments mutually separated by a system of slots, which system of slots serves as an air supply to a feed space for the plants located above the grid.

7. An apparatus as claimed in claim 6, wherein said placement compartments and said feed space are jointly arranged in a screened box.

8. An apparatus as claimed in claim 7, wherein the bottom of said screened box is provided with bottom slots which each extend in one direction at the areas of slots of said system of slots and substantially parallel to slots of said system.

9. An apparatus as claimed in claim 6, wherein said system of slots delimits a rectangular space for each placement compartment.

10. An apparatus as claimed in claim 6, wherein the apparatus is further provided with a feeder mechanism for plants which extends in a direction alongside a row from among a series of rows of placements compartments in a distributed manner and which has a feed direction transverse to said rows.

11. An apparatus as claimed in claim 6, wherein mutually adjoining rows of placement compartments are interconnected by an end mechanism which allows a relative rotation of said mutually adjoining rows about an axis parallel to their longitudinal axes.
